# EUROPEAN PATENT SPECIFICATION

(11) **EP 2 743 318 B1**
(45) Date of publication and mention of the grant of the patent: **29.11.2017**
(21) Application number: 12822457.3
(22) Date of filing: 08.08.2012
(51) Int. Cl.: C09D 11/00, B41M 5/00, C09B 62/085, C09B 67/20, C09B 67/22, C09B 67/44, D06P 1/382, D06P 3/66, D06P 5/00, D06P 5/30

(54) **GRAY INK COMPOSITION FOR INK JET PRINTING AND METHOD FOR PRINTING FIBERS USING SAME**
GRAUE TINTENZUSAMMENSETZUNG FÜR TINTENSTRAHLDRUCK UND VERFAHREN ZUM BEDRUCKEN VON FASERN DAMIT
COMPOSITION D'ENCRE GRISE POUR IMPRESSION À JET D'ENCRE ET PROCÉDÉ POUR IMPRIMER DES FIBRES UTILISANT CELLE-CI

(30) Priority: 09.08.2011 JP 2011173665
(43) Date of publication of application: 18.06.2014
(73) Proprietor: Nippon Kayaku Kabushiki Kaisha, Tokyo 102-8172 (JP)
(72) Inventor: SHIMIZU, Shinsuke, Tokyo 115-8588 (JP); TABE, Tadahiko, Tokyo 115-8588 (JP); UMEDA, Mariko, Tokyo 115-8588 (JP)
(74) Representative: Maiwald Patentanwalts GmbH
(86) International application number: PCT/JP2012/070261
(87) International publication number: WO 2013/022044

(56) References cited:
- EP-A1- 2 311 917
- WO-A1-2011/013503
- DE-A1-102006 028 262
- JP-A- 1 020 268
- JP-A- 7 048 781
- JP-A- 59 008 763
- JP-A- 63 179 970
- JP-A- 2010 116 566
- US-A- 5 071 442
- US-A1- 2003 172 840
- US-A1- 2009 320 217

## Description

### TECHNICAL FIELD

The present invention relates to an ink composition for ink jet textile printing and an ink jet textile printing method using the same, more specifically, to a reactive dye ink for ink jet textile printing with an excellent coloring property, and more particularly, to an ink composition for ink jet textile printing with excellent color reproducibility within the gray hue range and favorable discharge stability and a method for ink jet textile printing of cellulosic fibers using the same.

### BACKGROUND ART

Ink jet textile printing of fibers carried out using an ink jet printer is advantageous as compared with printing methods such as screen printing, roller printing and rotary printing in many aspects in that: a plate making step is not required thereby enabling simplification of steps; a digitalized design can be printed as it is via a computer; various types of products can be produced even in small quantities; the amount of waste liquids of dye color paste and the like can be significantly reduced; and the like. On the other hand, ink jet textile printing involves problems of low print processing speed, difficulty in expressing deep colors, and the like as compared with conventional plate-making printing. Therefore, ink jet textile printing has been predominantly used for producing sample textiles and for small-scale production.

In recent years, ink jet textile printing has become increasingly popular as a result of: significant improvement in the printing speed of ink jet printers due to technical progress of image processing by means of a computer and print head manufacturing; and demands on the market for the digitalization of print designs, as well as diversification and lot reduction in print processing.

Acidic dye inks for polyamide-based fibers such as silk and nylon, dispersion dye inks for polyester-based fibers, reactive dye inks for cellulosic fibers such as cotton and rayon and the like have been commercially available as dye inks for ink jet textile printing.

In ink jet textile printing carried out using reactive dyes, an ink set including dye inks in four colors, that is, black, yellow, magenta, and cyan, has been used, and generally special colors such as light magenta, light cyan, gray (light black), golden yellow, orange, red, blue, violet, green, and the like are added in addition to aforementioned four colors. Thus, the development of an ink set that is capable of providing printed fabrics having high quality and high fastness properties, and is also superior in discharge stability has been demanded. To meet such demands, a variety of gray inks for ink jet textile printing have been proposed thus far. However, conventional gray inks have a problem with a difference in density at the time of color formation depending on the steaming time. Black inks were proposed in Patent Documents 1 to 3, and a gray ink was proposed in Patent Document 4. However, a gray ink has not been provided that contains a reactive dye as a coloring agent and has sufficient color reproducibility.

Furthermore, for example, C.I.Reactive Yellow 95, C.I.Reactive Orange 12, C.I.Reactive Red 31, C.I.Reactive Blue 15:1, C.I.Reactive Black 8, and the like described in Patent Documents 1 to 6 are known as coloring agents suitable for a gray reactive dye ink for textile printing.
Patent Document 1: Japanese Unexamined Patent Application, Publication No. H08-127730
Patent Document 2: Japanese Unexamined Patent Application, Publication No. H08-259866
Patent Document 3: PCT International Application, Publication No. 2009/104547
Patent Document 4: PCT International Application, Publication No. 2010/013649
Patent Document 5: Japanese Examined Patent Application Publication No. H03-32584
Patent Document 6: Japanese Examined Patent Application Publication No. H07-94617

US5071442 discloses trichromatic printing compositions for printing on cellulosic textiles comprising reactive dyes, such as reactive monoazo dyes.

US2009/320217 and DE102006028262 disclose ink-jet ink compositions comprising reactive monoazo dyes.

US2003/172840 and EP2311917 disclose ink-jet ink compositions comprising C.I. reactive black 8.

### DISCLOSURE OF THE INVENTION

### Problems to be Solved by the Invention

An object of the present invention is to provide a gray ink composition for ink jet textile printing with high color reproducibility in color formation, and particularly, excellent color reproducibility within the gray hue range and favorable discharge stability.

### Means for Solving the Problems

The present inventors carried out thorough investigations in order to solve the foregoing problem, and consequently found that a gray ink composition for textile printing containing a specific reactive dye as a coloring agent has excellent color reproducibility particularly within the gray hue range and is also superior in discharge stability. Thus, the present invention was accomplished.

Accordingly, the present invention provides the following.

A first aspect of the invention provides a gray ink composition for ink jet textile printing containing a compound represented by the following formula (1) or a salt thereof in a coloring agent: 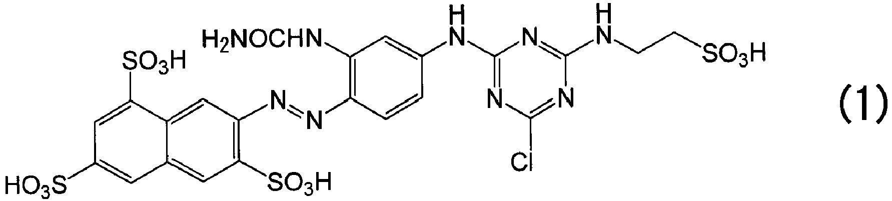 and further containing C.I.Reactive Black 8 in the coloring agent. A second aspect of the invention provides the gray ink composition for ink jet textile printing according to the first aspect, further containing a water-soluble organic solvent. A third aspect of the invention provides the gray ink composition for ink jet textile printing according to any one of the first to second aspects, further containing tris(hydroxymethyl)aminomethane as a pH adjusting agent. A fourth aspect of the invention provides the gray ink composition for ink jet textile printing according to any one of the first to third aspects, in which a viscosity of the gray ink composition is in the range of 3 to 20 mPa·s at 25 °C. A fifth aspect of the invention provides an ink set for ink jet textile printing containing the gray ink composition for ink jet textile printing according to any one of the first to fourth aspects, a cyan ink composition, a magenta ink composition, a yellow ink composition, and a black ink composition. A sixth aspect of the invention provides a textile printing method of cellulosic fibers, the method including the steps of:
A) applying an ink to cellulosic fibers using the gray ink composition for ink jet textile printing according to any one of the first to fifth aspects as the ink with an ink jet printer,
B) allowing the coloring agent in the ink applied in the step A) to react and fix on the cellulosic fibers by heat, and
C) washing away unfixed coloring agent remaining in the cellulosic fibers.

An seventh aspect of the invention provides the textile printing method of cellulosic fibers according to the sixth aspect, further including the step of:
D) pretreating the fibers before applying the ink by applying an aqueous solution containing at least a sizing material, an alkaline substance, an anti-reducing agent, and a hydrotropic agent to the cellulosic fibers.

### Effects of the Invention

The gray ink composition for ink jet textile printing and the ink set for ink jet textile printing of the present invention have particularly excellent color reproducibility within the gray hue range and also excellent discharge stability. Therefore, according to the textile printing method using the same, it is possible to obtain a dyed fabric with high color reproducibility.

### PREFERRED MODE FOR CARRYING OUT THE INVENTION

The present invention will be described in detail.

Although the present invention contains a compound represented by the above formula (1) or a salt thereof, it is cumbersome to describe the two as "compound or a salt thereof". Therefore, hereinafter, unless otherwise defined specifically, "compound or a salt thereof" will be described simply as "compound" for the sake of convenience. Furthermore, hereinafter, "gray ink composition" will be described simply as "ink composition" likewise.

The ink composition of the present invention is used for ink jet textile printing of cellulosic fibers and a fabric made from the fibers (hereinafter, these two will be described as "cellulosic fibers" for the sake of convenience).

The ink composition of the present invention contains a compound represented by the above formula (1 and C.I. Reactive Black 8 in a coloring agent. Since this compound is contained therein, the ink composition of the present invention can realize high color reproducibility in color formation and high definition in dyeing within the gray hue range. This compound can be synthesized by the method described in Japanese Examined Patent Application Publication No. H7-94617.

The content of the compound represented by the above formula (1) in the total mass of the ink composition of the present invention is preferably 0.01 to 1% by mass, and more preferably 0.02 to 0.5% by mass.

The ink composition of the present invention contains other coloring agents for the purpose of adjusting color tone. Examples of the coloring agent (reactive dye) used for adjusting color tone include orange-based dyes such as C.I. Reactive Orange 5, 9, 12, 13, 35, 45, and 99; brown-based dyes such as C.I. Reactive Brown 2, 8, 9, 17, and 33; red-based dyes such as C.I. Reactive Red 3, 3:1, 4, 13, 24, 29, 31, 33, 125, 151, 206, 218, 226, and 245; violet-based dyes such as C.I. Reactive Violet 1 and 24; blue-based dyes such as C.I. Reactive Blue 2, 5, 10, 13, 14, 15, 15:1, 49, 63, 71, 72, 75, 162, and 176; green-based dyes such as C.I. Reactive Green 5, 8, and 19; and black-based dyes such as C.I. Reactive Black 1, 8, 23, and 39. In particular, orange-based, red-based, blue-based dyes, and black-based dyes are preferably blended. As a more preferable form, the blue-based dyes such as C.I. Reactive Blue 2, 5, 10, 13, 14, 15, 15:1, 49, 63, 71, 72, 75, 162, and 176 are used as a main component, and at least 2 to 3 dyes of the red-based dyes such as C.I. Reactive Red 3, 3:1, 4, 13, 24, 29, 31, 33, 125, 151, 206, 218, 226, and 245, and the violet-based dyes such as C.I. Reactive Violet 1 and 24 are blended to use a black dye having violet to blue colors. Furthermore, the black-based dyes such as C.I. Reactive Black 1, 8, 23, and 39 are also preferably used for ease of color adjustment. Particularly, among these, C.I. Reactive Black 8 is useful in that it makes it easy to adjust to the desired color tone with a small amount added and it has excellent color reproducibility within the gray hue range.

The content of the other coloring agent in the total mass of the ink composition of the present invention is preferably 0.5 to 10% by mass, and more preferably 1 to 5% by mass.

The reactive dye may be a dye in the form of: powder, block, wet cake, or the like. Such reactive dyes having a variety of qualities are commercially available such as powder for industrial dyeing, liquid products for textile printing, and dyes for ink jet textile printing, and their production method, purity and the like vary. Some of them may contain an inorganic salt such as sodium chloride or sodium sulfate in a considerable amount (about 10% by mass to about 40% by mass in the total mass of the product). The ink composition of the present invention is preferably prepared using a material with impurities as low as possible in order to minimize adverse effects on storage stability and accuracy of discharge from ink jet printers. Additionally, water not purified particularly and the like may contain metal ions such as calcium ions and magnesium ions. Therefore, the ions and the like will be included in the ink composition also when prepared using such water or the like, although the amount of the contaminants may be slight. For the sake of simplicity, hereinafter, the above-mentioned inorganic salts and metal ions altogether will be referred to as "inorganic impurities". These inorganic impurities not only significantly deteriorate storage stability and solubility of the dye in the ink composition, but also may be the cause of corrosion and abrasion of ink jet printer heads. In order to eliminate these inorganic impurities, it is preferred that a well-known process such as an ultrafiltration process, a reverse osmosis process, or an ion exchange process be utilized to eliminate the inorganic impurities included in the ink composition as much as possible. The content of the inorganic impurities included in the total mass of the ink composition is generally no more than 1% by mass, preferably no more than 0.5% by mass, and more preferably no more than 0.1% by mass.

The salt of the compound represented by the above formula (1) is an inorganic- or organic-cation salt. Among these, specific examples of the inorganic salt may include alkali-metal salts, alkaline-earth metal salts, and ammonium salts. Preferred inorganic salts may include salts of lithium, sodium, or potassium, and ammonium. Furthermore, the organic-cation salt is exemplified by salts of the quaternary ammonium ion represented by the following formula (2), but is not limited thereto. Moreover, a free acid, a tautomer thereof, and a mixture of various types of the salts are acceptable. For example, a mixture of any combination, such as a mixture of a sodium salt with an ammonium salt, a mixture of a free acid with a sodium salt, and a mixture of a lithium salt, a sodium salt, and an ammonium salt may be used. Physical properties such as solubility may vary according to the type of the salt and, as necessary, the type of salt may be appropriately selected, or in the case in which a plurality of salts and the like are included, a mixture having physical properties suitable for the purpose can be obtained by changing the proportion.

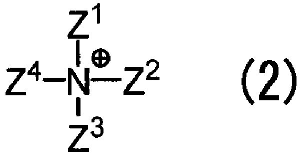

In the above formula (2), Z¹, Z², Z³, and Z⁴ each independently represent a group selected from the group consisting of a hydrogen atom, an alkyl group, a hydroxyalkyl group, and a hydroxyalkoxyalkyl group.

Specific examples of the alkyl group that may be represented by Z¹, Z², Z³, and Z⁴ in the above formula (2) may include: methyl, ethyl, n-propyl, isopropyl, n-butyl, isobutyl, sec-butyl, tert-butyl, and the like; specific examples of the hydroxyalkyl group may include hydroxy C1-C4 alkyl groups such as hydroxymethyl, hydroxyethyl, 3-hydroxypropyl, 2-hydroxypropyl, 4-hydroxybutyl, 3-hydroxybutyl, and 2-hydroxybutyl; and examples of the hydroxyalkoxyalkyl group may include hydroxy C1-C4 alkoxy C1-C4 alkyl groups such as hydroxyethoxymethyl, 2-hydroxyethoxyethyl, 3-hydroxyethoxypropyl, 2-hydroxyethoxypropyl, 4-hydroxyethoxybutyl, 3-hydroxyethoxybutyl and 2-hydroxyethoxybutyl. Among these, hydroxyethoxy C1-C4 alkyl is preferred. Particularly preferred examples may include a hydrogen atom; methyl; hydroxy C1-C4 alkyl groups such as hydroxymethyl, hydroxyethyl, 3-hydroxypropyl, 2-hydroxypropyl, 4-hydroxybutyl, 3-hydroxybutyl and 2-hydroxybutyl; and hydroxyethoxy C1-C4 alkyl groups such as hydroxyethoxymethyl, 2-hydroxyethoxyethyl, 3-hydroxyethoxypropyl, 2-hydroxyethoxypropyl, 4-hydroxyethoxybutyl, 3-hydroxyethoxybutyl and 2-hydroxyethoxybutyl.

Specific examples of combinations of Z¹, Z², Z³, and Z⁴ in the preferred compound represented by the above formula (2) are listed in the following Table 1.

**[Table 1]**

| Compound No. | Z ¹ | Z ² | Z ³ | Z ⁴ |
|---|---|---|---|---|
| 1-1 | H | CH3 | CH3 | CH3 |
| 1-2 | CH3 | CH3 | CH3 | CH3 |
| 1-3 | H | -C2H4OH | -C2H4OH | -C2H4OH |
| 1-4 | CH3 | -C2H4OH | -C2H4OH | -C2H4OH |
| 1-5 | H | -CH2CH(OH)CH3 | -CH2CH(OH)CH3 | -CH2CH(OH)CH3 |
| 1-6 | CH3 | -CH2CH(OH)CH3 | -CH2CH(OH)CH3 | -CH2CH(OH)CH3 |
| 1-7 | H | -C2H4OH | H | -C2H4OH |
| 1-8 | CH3 | -C2H4OH | H | -C2H4OH |
| 1-9 | H | -CH2CH(OH)CH3 | H | -CH2CH(OH)CH3 |
| 1-10 | CH3 | -CH2CH(OH)CH3 | H | -CH2CH(OH)CH3 |
| 1-11 | CH3 | -C2H4OH | CH3 | -C2H4OH |
| 1-12 | CH3 | -CH2CH(OH)CH3 | CH3 | -CH2CH(OH)CH3 |

In order to produce the desired salts of the compounds represented by the above formula (1) according to the present invention, a desired inorganic salt or organic-cation salt may be added, after a reaction, to the reaction solution to permit salting out, or a corresponding salt solution may be prepared by adding a mineral acid such as hydrochloric acid for isolation in the form of a free acid, followed by washing as necessary with water, acidic water, an aqueous organic medium, or the like to remove the inorganic salt, and thereafter neutralizing in an aqueous medium with a desired inorganic or organic base. Herein, the acidic water is exemplified by mineral acids such as sulfuric acid and hydrochloric acid, and by organic acids such as acetic acid dissolved in water to prepare an acidic solution. Moreover, the aqueous organic medium means an organic substance that contains water and that is miscible with water, as well as so-called organic solvents that are miscible with water, and the like. Specific examples of the aqueous organic medium may include water-soluble organic solvents to be described later, and the like, but an organic substance not classified as a solvent in general can be also used if necessary as long as it is miscible with water. Examples of the organic substance not classified as a solvent in general may include urea, saccharides, and the like.

Examples of the inorganic salt may include alkali-metal salts such as lithium chloride, sodium chloride, and potassium chloride, and ammonium salts such as ammonium chloride and ammonium bromide. Examples of the organic-cation salt may include halogen salts of organic amines, and the like. Examples of the inorganic base may include hydroxides of alkali metals such as lithium hydroxide, sodium hydroxide, and potassium hydroxide, ammonium hydroxide, or carbonates of alkali metals such as lithium carbonate, sodium carbonate, potassium carbonate, and the like. Examples of the organic base may include organic amines such as salts of quaternary ammoniums represented by the above formula (2), such as diethanolamine, triethanolamine, and the like, but are not limited thereto.

The ink composition of the present invention is prepared by using water as a medium, and may suitably contain a water-soluble organic solvent or an ink preparation agent if necessary, in the range not leading to impairment of the effects of the present invention.

Since a water-soluble organic solvent may have the function of a viscosity adjusting agent or a drying inhibitor, it is preferable that the water-soluble organic solvent be included in the ink composition of the present invention. Moreover, since the ink composition of the present invention constitutes an ink composition containing a reactive dye, a solvent that does not react with the dye in the ink composition and that has a high wetting effect in order to prevent clogging at the nozzle in the ink jet printer, and the like, is preferably used.

Examples of the ink preparation agent may include well-known additives such as a preservative fungicide, a pH adjusting agent, a chelating agent, a rust-preventive agent, an ultraviolet light absorbing agent, a viscosity adjusting agent, a dye solubilizer, a discoloration-preventive agent, a surface tension adjusting agent, and a defoaming agent. Furthermore, the surface tension of the ink composition is preferably adjusted with a variety of surfactants, that is, anionic surfactants, cationic surfactants, amphoteric surfactants, nonionic surfactants, and the like.

In the total mass of the ink composition of the present invention, the content of the water-soluble organic solvent is 0 to 60% by mass, and preferably 10 to 50% by mass, and the content of the ink preparation agent is 0 to 10% by mass, and preferably 0.05 to 10% by mass. The remainder other than the compound represented by the above formula (1), the other coloring agent, the water-soluble organic solvent, and the ink preparation agent in the ink composition of the present invention is water.

Polyhydric alcohols, pyrrolidones, and the like may be examples of the water-soluble organic solvent described above. For example, C2-C6 polyhydric alcohols having two to three alcoholic hydroxy groups, poly C2-C3 alkylene glycols having four or more repeating units and having a molecular weight of no higher than about 20,000, and preferably liquid polyalkylene glycols, and the like may be examples of the polyhydric alcohols. Among these, C2-C3 alkylene glycols and pyrrolidones are preferred, and the former are more preferred.

Furthermore, the water-soluble organic solvent may include a material that is solid at room temperature, such as trimethylolpropane. The above-described material has water solubility although it is solid, and an aqueous solution containing the material exhibits the same property as the water-soluble organic solvent, and thus can be used in expectation of the same effect. Therefore, in the present specification, even the solid material as described above is regarded as being included in the category of the water-soluble organic solvent as long as it can be used in expectation of the effect as described above for the sake of convenience.

Specific examples of the water-soluble organic solvent may include: C2-C6 polyhydric alcohols having two to three alcoholic hydroxy groups such as glycerin, 1,3-pentanediol and 1,5-pentanediol; polyglyceryl ethers such as diglycerin and polyglycerin; polyoxy C2-C3 alkylene polyglyceryl ethers such as polyoxyethylene polyglyceryl ether and polyoxypropylene polyglyceryl ether; mono-, di-, or tri- C2-C3 alkylene glycols such as ethylene glycol, diethylene glycol, triethylene glycol, propylene glycol, and polyethylene glycol; poly C2-C3 alkylene glycols such as polyethylene glycol and polypropylene glycol; pyrrolidones such as 2-pyrrolidone and N-methyl-2-pyrrolidone; and the like. Among these, particularly, propylene glycol and 2-pyrrolidone are preferred. The water-soluble organic solvent may be used either alone or in combination.

Examples of the preservative fungicide may include compounds such as organic sulfur-based, organic nitrogen sulfur-based, organic halogen-based, haloallylsulfone-based, iodopropargyl-based, N-haloalkylthio-based, benzothiazole-based, nitrile-based, pyridine-based, 8-oxyquinoline-based, isothiazoline-based, dithiol-based, pyridineoxide-based, nitropropane-based, organic tin-based, phenol-based, quaternary ammonium salt-based, triazine-based, thiadiazine-based, anilide-based, adamantane-based, dithiocarbamate-based, brominated indanone-based, benzyl bromoacetate-based, and inorganic salt-based compounds.

Examples of the organic halogen-based compound may include sodium pentachlorophenol.

Examples of the pyridineoxide-based compound may include sodium 2-pyridinethiol-1-oxide.

Examples of the isothiazoline-based compound may include 1,2-benzoisothiazolin-3-one, 2-n-octyl-4-isothiazolin-3-one, 5-chloro-2-methyl-4-isothiazolin-3-one, 5-chloro-2-methyl-4-isothiazolin-3-one magnesium chloride, 5-chloro-2-methyl-4-isothiazolin-3-one calcium chloride, 2-methyl-4-isothiazolin-3-one calcium chloride, and the like.

Additional examples of the preservative fungicide include sodium acetate, sodium dehydroacetic acid, sodium sorbate, sodium benzoate, and the like; or trade names Proxel^{RTM} GXL(S) and Proxel^{RTM} XL-2(S) manufactured by Arch Chemical, Inc., and the like. As used herein, the superscript notation of "RTM" means a registered trademark.

The pH adjusting agent may be used for the purpose of improving storage stability of the ink, and an arbitrary substance can be used as long as the pH of the ink can be controlled to be in the range of 6.0 to 11.0. Examples of the pH adjusting agent include: alkanolamines such as diethanolamine and triethanolamine; hydroxides of an alkali metal such as lithium hydroxide, sodium hydroxide, and potassium hydroxide; ammonium hydroxide; carbonates of an alkali metal such as lithium carbonate, sodium carbonate, and potassium carbonate; aminosulfonic acids such as taurine; and the like. In particular, a preferred example of the pH adjusting agent is tris(hydroxymethyl)aminomethane. Furthermore, the content of the tris(hydroxymethyl)aminomethane in the total mass of the ink composition of the present invention is generally 0.1 to 2% by mass, and preferably 0.3 to 1.5% by mass.

The chelating agent may include, for example, disodium ethylenediamine tetraacetate, sodium nitrilo triacetate, sodium hydroxyethylethylenediamine triacetate, sodium diethylenetriamine pentaacetate, sodium uracil diacetate, and the like.

The rust-preventive agent may include, for example, acidic sulfite, sodium thiosulfate, ammonium thioglycolate, diisopropylammonium nitrite, pentaerythritol tetranitrate, dicyclohexylammonium nitrite, and the like.

Examples of the ultraviolet light absorbing agent include benzophenone-based compounds, benzotriazole-based compounds, cinnamic acid-based compounds, triazine-based compounds, and stilbene-based compounds. A so-called fluorescent whitening agent may also be used, which is a compound that absorbs ultraviolet light to emit fluorescence, and which is typified by a benzoxazole-based compound.

The viscosity-adjusting agent may include, in addition to the water-soluble organic solvent, water-soluble polymer compounds such as polyvinyl alcohols, cellulose derivatives, polyamine, and polyimine.

The dye solubilizer may include, for example, urea, ε-caprolactam, ethylene carbonate, and the like. Among these, it is preferred to use urea.

The discoloration-preventive agent is used for the purpose of improving storability of the image. As the discoloration-preventive agent, a variety of organic and metal complex-based discoloration-preventive agents may be used. Examples of the organic discoloration-preventive agent include hydroquinones, alkoxyphenols, dialkoxyphenols, phenols, anilines, amines, indanes, chromanes, alkoxyanilines, heterocycles, and the like. Examples of the metal complex include nickel complexes, zinc complexes, and the like.

Examples of the surface tension adjusting agent include surfactants such as anionic surfactants, amphoteric surfactants, cationic surfactants, and nonionic surfactants.

Examples of the anionic surfactant include alkylsulfocarboxylic acid salts, α-olefinsulfonic acid salts, polyoxyethylenealkyl ether acetic acid salts, N-acylamino acid and salts thereof, N-acylmethyltaurine salts, alkylsulfate polyoxyalkyl ether sulfuric acid salts, alkylsulfate polyoxyethylenealkyl ether phosphoric acid salts, rosin acid soap, castor oil sulfate ester salts, lauryl alcohol sulfate ester salts, alkylphenolic phosphate esters, alkylated phosphate esters, alkylarylsulfonic acid salts, diethyl sulfosuccinic acid salts, diethylhexyl sulfosuccinic acid salts, dioctyl sulfosuccinic acid salts, and the like.

Examples of the cationic surfactant include 2-vinylpyridine derivatives, poly(4-vinylpyridine) derivatives, and the like.

Examples of the amphoteric surfactant include lauryldimethylamino acetate betaine, 2-alkyl-N-carboxymethyl-N-hydroxyethylimidazolinium betaine, coconut oil fatty acid amide propyldimethylamino acetate betaine, polyoctylpolyaminoethylglycine, imidazoline derivatives, and the like.

Examples of the nonionic surfactant include: ether-based surfactants such as polyoxyethylene nonylphenyl ether, polyoxyethylene octylphenyl ether, polyoxyethylene dodecyl phenyl ether, polyoxyethylene oleyl ether, polyoxyethylene lauryl ether, and polyoxyethylene alkyl ether; ester-based surfactants such as polyoxyethylene oleate esters, polyoxyethylene distearate esters, sorbitan laurate, sorbitan monostearate, sorbitan monooleate, sorbitan sesquioleate, polyoxyethylene monooleate, and polyoxyethylene stearate; acetylene glycol (alcohol)-based surfactants such as 2,4,7,9-tetramethyl-5-decyne-4,7-diol, 3,6-dimethyl-4-octyne-3,6-diol, and 3,5-dimethyl-1-hexyn-3-ol; trade names Surfynol^{RTM} 104, Surfynol^{RTM} 82, Surfynol^{RTM} 440, and Surfynol^{RTM} 465, and Olfine^{RTM} STG manufactured by Nissin Chemical Co., Ltd.; trade name Tergitol^{RTM} 15-S-7 manufactured by Sigma-Aldrich Corporation; and the like. Among these, Surfynol^{RTM}-based nonionic surfactants are preferred, and Surfynol^{RTM} 440 is more preferred.

Examples of the defoaming agent include highly oxidized oil-based compounds, glycerin fatty acid ester-based compounds, fluorine-based compounds, silicone-based compounds, and the like.

These ink preparation agents may be used either alone or in combination. The surface tension of the ink composition of the present invention is usually 20 to 40 mN/m, and more preferably 25 to 35 mN/m.

The viscosity of the ink composition of the present invention is preferably 3 to 20 mPa·s, and more preferably 3 to 8 mPa·s. Furthermore, the viscosity of the ink composition may be adjusted to an appropriate value within the above range taking into consideration the amount of discharge, response speed, and flight characteristics of the ink droplets, the characteristics of the ink jet head, and the like of the printer used.

In preparation of the ink composition of the present invention, the order of dissolving each reagent, such as additives, is not particularly limited. Water employed when the ink composition is prepared preferably includes impurities in an amount as low as possible, and thus water such as ion exchanged water or distilled water is preferred. Furthermore, precision filtration may be carried out to remove contamination in the ink composition using a membrane filter or the like as needed after the ink composition is prepared. In particular, when the ink composition of the present invention is used as an ink for ink jet recording, it is preferred to carry out the precision filtration. The filter used in the precision filtration has a pore diameter of usually 1 to 0.1 µm, and preferably 0.8 to 0.1 µm.

In the case of using the ink composition of the present invention, an ink set including ink compositions of five colors by adding cyan, magenta, yellow and black in addition to the ink composition is provided, and, thus, full color printing can be realized. Coloring agents contained in the cyan, magenta, yellow, and black ink compositions may be well-known compounds, and not particularly limited. However, dyes are more preferred than pigments, and reactive dyes are even more preferred.

A coloring agent contained in the yellow ink composition used in the ink set including ink compositions of five colors may include, for example, C.I. Reactive Yellow 2, 3, 18, 81, 84, 85, 95, 99, and 102, and preferably C.I.Reactive Yellow 2 and 95. The content of the coloring agent in the total mass of the yellow ink composition is generally 0.5 to 20% by mass, and preferably 7 to 15% by mass.

A coloring agent contained in the cyan ink composition used in the ink set including ink compositions of five colors may include, for example, C.I. Reactive Blue 2, 5, 10, 13, 14, 15, 15:1, 49, 63, 71, 72, 75, 162, and 176, and preferably C.I. Reactive Blue 15:1. The content of the coloring agent in the total mass of the cyan ink composition is generally 0.5 to 20% by mass, and preferably 7 to 15% by mass.

A coloring agent contained in the magenta ink composition used in the ink set including ink compositions of five colors may include, for example, C.I. Reactive Red 3, 3:1, 4, 13, 24, 29, 31, 33, 125, 151, 206, 218, 226, and 245, and preferably C.I. Reactive Red 31 and 245. The content of the coloring agent in the total mass of the magenta ink composition is generally 0.5 to 20% by mass, and preferably 7 to 15% by mass.

A coloring agent contained in the black ink composition used in the ink set including ink compositions of five colors may include, for example, C.I. Reactive Black 1, 8, 23, and 39, and preferably C.I. Reactive Black 8. The content of the coloring agent in the total mass of the black ink composition is generally 0.5 to 20% by mass, and preferably 10 to 20% by mass. In the black ink composition, a blended dye including a blue-based dye as a main component, an orange-based dye, and a red-based dye may be blended as a mixed dye and then used as a coloring agent. Furthermore, the black ink composition may be additionally blended with other dyes for the purpose of adjusting color tone.

Examples of a coloring agent blended with the black ink composition include orange-based dyes such as C.I. Reactive Orange 5, 9, 12, 13, 35, 45, and 99; brown-based dyes such as C.I. Reactive Brown 2, 8, 9, 17, and 33; red-based dyes such as C.I. Reactive Red 3, 3:1, 4, 13, 24, 29, 31, 33, 125, 151, 206, 218, 226, and 245; violet-based dyes such as C.I. Reactive Violet 1 and 24; blue-based dyes such as C.I. Reactive Blue 2, 5, 10, 13, 14, 15, 15:1, 49, 63, 71, 72, 75, 162, and 176; and green-based dyes such as C.I. Reactive Green 5, 8, and 19. In particular, orange-based, red-based, and blue-based dyes are preferably blended. In addition, the total content of the coloring agent in the total mass of the black ink composition may fall within the above-mentioned range including these coloring agents which may be blended.

The ink set may be provided as an ink set of 6 to 14 colors by adding ink compositions of light yellow, light magenta, light cyan, blue, violet, red, orange, green, golden yellow, etc., which may be generally referred to as "special color" as needed, to the aforementioned ink set of five colors, that is, the ink set including each ink composition of gray, cyan, magenta, yellow, and black, whereby printing with more variable hue may be also realized.

Of the special colors described above, with respect to the ink compositions of light yellow, light magenta, and light cyan, ink compositions prepared by reducing the dye concentrarion of the aforementioned ink compositions of the three colors, respectively, that is, each of the ink compositions of yellow, magenta, and cyan, may be used. The dye concentrarion on mass basis of each of the ink compositions of light yellow, light magenta, and light cyan with respect to the dye concentrarion of each of the ink compositions of yellow, magenta, and cyan is typically no greater than 1/2, preferably no greater than 1/4, and more preferably no greater than 1/6, whereas the lower limit may be about 1/20, and preferably 1/10.

Furthermore, the coloring agents to be contained in the light yellow ink, light magenta ink, and light cyan ink compositions are preferably the same as those contained in the ink compositions of the three colors, that is, yellow, magenta, and cyan, respectively.

Of the aforementioned special colors, examples of the coloring agent contained in the orange ink composition include C.I. Reactive Orange 5, 9, 12, 13, 35, 45, 99, and the like, and C.I. Reactive Orange 12 and 13 are preferred. In addition, the content of the coloring agent in the total mass of the orange ink composition is typically 0.5 to 20% by mass, and preferably 7 to 15% by mass.

Of the aforementioned special colors, examples of the coloring agent contained in the golden yellow ink composition include C.I. Reactive Orange 5, 9, 12, 13, 35, 45, 99, and the like, and C.I. Reactive Orange 12 and 13 are preferred. In addition, the content of the coloring agent in the total mass of the golden yellow ink composition is typically 0.5 to 20% by mass, and preferably 7 to 15% by mass.

Of the aforementioned special colors, examples of the coloring agent contained in the red ink composition include C.I. Reactive Red 3, 3:1, 4, 13, 24, 29, 31, 33, 125, 151, 206, 218, 226, 245, and the like, and C.I. Reactive Red 3:1 and 24 are preferred. In addition, the content of the coloring agent in the total mass of the red ink composition is typically 0.5 to 20% by mass, and preferably 7 to 15% by mass.

Of the aforementioned special colors, examples of the coloring agent contained in the blue ink composition include C.I. Reactive Blue 2, 5, 10, 13, 14, 15, 15:1, 49, 63, 71, 72, 75, 162, 176, and the like, and C.I. Reactive Blue 49 is preferred. In addition, the content of the coloring agent in the total mass of the blue ink composition is typically 0.5 to 20% by mass, and preferably 7 to 15% by mass.

Of the aforementioned special colors, examples of the coloring agent contained in the green ink composition include C.I. Reactive Green 5, 8, 19, and the like. In addition, the content of the coloring agent in the total mass of the green ink composition is typically 0.5 to 20% by mass, and preferably 7 to 15% by mass.

Of the aforementioned special colors, examples of the coloring agent contained in the violet ink composition include C.I. Reactive Violet 1, 24, and the like. In addition, the content of the coloring agent in the total mass of the violet ink composition is typically 0.5 to 20% by mass, and preferably 7 to 15% by mass.

The cyan, magenta, yellow, and black ink compositions used in the ink set or the ink compositions of the special colors, that is light yellow, light magenta, light cyan, blue, violet, red, orange, green, golden yellow, and the like, may contain a water-soluble organic solvent and an ink preparation agent in the same manner as the ink composition of the present invention. The type of the water-soluble organic solvent and ink preparation agents contained in the ink compositions may be selected each independently from the above examples, but it is preferable that the same components be used. Moreover, the contents of the coloring agent, the water-soluble organic solvent, ink preparation agents, and the like in each ink composition are not necessarily the same for each color, and are preferably adjusted ad libitum taking into consideration the viscosity and the like of the composition, depending on the properties, etc., of the coloring agent contained.

In the ink jet textile printing method of the present invention, the ink composition of the present invention is used to execute printing on cellulosic fibers, preferably a fabric made from the fibers. The ink nozzle and the like used in this method are not particularly limited, and may be selected appropriately in accordance with the purpose. The fabric is preferably constituted predominantly of cellulosic fibers, and examples thereof may include natural fibers such as cotton and hemp, regenerated cellulose fibers such as rayon, blended fibers containing these fibers, and the like.

As a method for textile printing of cellulosic fibers using the ink composition of the present invention, for example, a method in which the three steps of: (step A) applying the ink to cellulosic fibers using the ink composition of the present invention as the ink with an ink jet printer; (step B) allowing the coloring agent in the ink applied in the step A to react and fix on the cellulosic fibers by heat; and (step C) washing away unfixed coloring agent remaining in the cellulosic fibers are sequentially carried out may be exemplified. Preferably, the method also includes a step of subjecting the cellulosic fibers to a pretreatment such as anti-bleeding (step D).

In the step A, for example, vessels filled with the ink composition are attached to a preset position of an ink jet printer, and the ink may be applied to cellulosic fibers by discharging ink droplets of the ink in response to recording signals using each ink composition as an ink according to a general ink jet recording method. In the ink jet recording method, each of the ink compositions of yellow, magenta, cyan, black, or as needed, light yellow, light magenta, light cyan, orange, blue, violet, red, green, golden yellow, etc. may be used together with the ink compositions of the present invention. In this case, the ink composition of each color is injected into each vessel, and the vessels are attached at a preset position of the ink jet printer and then used.

There are ink jet printers in which, for example, a piezo system utilizing mechanical vibration; a bubble jet (registered trademark) system utilizing bubbles generated by heating; or the like is adopted. As the ink jet printing method of the present invention, it is possible to use any system.

As the aforementioned step B, that is, the step of allowing the coloring agent to react and fix, for example, a method in which after the ink is applied on the cellulosic fibers as described above, the fibers are left to stand at room temperature to 130°C for 0.5 to 30 minutes to permit preliminary drying, followed by carrying out a steaming treatment to allow the coloring agent to fix on the fibers under wet and hot conditions, and the like may be exemplified. The steaming treatment is preferably carried out by allowing standing in an environment with humidity of 80 to 100%, and a temperature of 95 to 105 °C for 5 to 20 minutes.

In the aforementioned step C, that is, the step of washing away unfixed coloring agent, it is preferred that the cellulosic fibers, after subjecting them to the steaming treatment, are washed with warm water, and additionally with water if necessary. The (warm) water may contain a surfactant. Thereafter, the fibers are dried at 50 to 120 °C for 5 to 30 minutes, whereby printed fibers can be obtained.

Although the aforementioned step D, that is, the step of subjecting the cellulosic fibers to a pretreatment is not a prerequisite in the textile printing method of the present invention, in light of prevention of bleeding of the coloring agent on the printed fibers, it is preferred to carry out the three steps of A to C described above after subjecting the cellulosic fibers to the pretreatment in the step D. In the step of subjecting the cellulosic fibers to a pretreatment, it is preferred that an aqueous solution of a pretreatment agent including a sizing material, an alkaline substance, an anti-reducing agent and a hydrotropic agent be used as a pretreatment liquid for application to the cellulosic fibers, and the aqueous solution is applied to cellulosic fibers, preferably applied by impregnating the fibers with the pretreatment liquid.

Examples of the sizing material include natural gums such as guar and locust bean, starches, sodium alginate, seaweeds such as funori, plant skin/sheath components such as pectic acid, cellulose derivatives such as methyl cellulose, ethyl cellulose, hydroxyethyl cellulose, and carboxymethyl cellulose, processed starches such as carboxymethyl starch, synthetic sizes such as polyvinyl alcohol and polyacrylic esters, and the like. The sizing material is preferably sodium alginate.

Examples of the alkaline substance include alkali metal salts of an inorganic acid or organic acid, salts of an alkaline earth metal, and compounds that release an alkali when heated. Alkali metal hydroxides and alkali metal salts of an inorganic acid or organic acid are preferred, and examples include sodium compounds, potassium compounds, and the like. Specific examples include alkali metal hydroxides such as sodium hydroxide and calcium hydroxide, alkali metal salts of an inorganic compound such as sodium carbonate, sodium hydrogen carbonate, potassium carbonate, sodium dihydrogen phosphate, disodium hydrogen phosphate, and sodium phosphate, alkali metal salts of an organic compound such as sodium formate and sodium trichloroacetate, and the like. The alkaline substance is preferably sodium hydrogen carbonate.

The anti-reducing agent is preferably sodium meta-nitrobenzene sulfonate.

Examples of the hydrotropic agent include ureas such as urea and dimethyl urea, and urea is preferred.

The aforementioned four types of pretreatment agents, that is, a sizing material, an alkaline substance, an anti-reducing agent, and a hydrotropic agent, may be used either alone or in combination, but use in combination is preferred. Each of the pretreatment agents may be used either alone or in combination.

An example of the mixing ratio of the pretreatment agents in the total mass of the pretreatment liquid is 0.5 to 5% of the sizing material, 0.5 to 5% of sodium hydrogen carbonate, 0 to 5% of sodium meta-nitrobenzene sulfonate, 1 to 20% of urea, all on the mass basis, and water for the balance.

The application of the pretreatment agents to the cellulosic fibers is exemplified by a padding method. The drawing rate in the padding is preferably about 40 to 90%, and more preferably about 60 to 80%.

The compound represented by the above formula (1) has excellent solubility with respect to water or a water-soluble organic solvent. Furthermore, in the process of preparing the ink composition of the present invention, the compound has favorable filterability with respect to, for example, a membrane filter. Furthermore, the ink composition of the present invention has excellent storage stability since there are no solid deposition, physical property changes, color changes, and the like after long-term storage.

Even if the ink composition of the present invention is used as an ink jet ink, deposition of solids due to drying of the ink composition in the vicinity of a nozzle hardly occurs, and clogging of the injector (recording head) can also be avoided. Furthermore, the ink composition of the present invention does not cause changes of physical properties even when the ink is used by recycling with a comparatively long time interval using a continuous ink jet printer, or even when intermittently used with an on-demand ink jet printer.

Furthermore, the fabric printed with the ink composition of the present invention has, particularly, high water resistance and high light resistance. For this reason, superior long-term storage stability of dyed fabric is also achieved. Moreover, high color reproducibility in color formation, and particularly excellent color reproducibility within the gray hue range can be attained as compared with conventional inks.

Accordingly, the ink composition of the present invention is very useful for applications as various types of recording inks, particularly applications as inks for ink jet textile printing of cellulosic fibers.

### EXAMPLES

Hereinafter, the present invention will be described in more detail by way of Examples, but the present invention is not limited to these Examples. In Examples, unless otherwise stated particularly, the term "part" means "part by mass", and "%" means "% by mass", respectively. Furthermore, the reaction temperature means an interior temperature, and with respect to some of the compounds synthesized, λmax (wavelength of maximum absorption) that is measured exhibits the value of measurement in an aqueous solution of pH 7 to 8.

### Synthesis Example 1

38.3 parts of 2-naphthylamine-3,6,8-trisulphonic acid were neutrally dissolved in 300 parts of water, and the temperature was set to 15 to 20 °C by addition of ice. With 7.0 parts of sodium nitrate and 23 parts of hydrochloric acid, a diazotization reaction was carried out. The resultant diazonium salt solution was combined with 15.1 parts of (3-aminophenyl)urea and subjected to a coupling reaction at 15 to 20 °C while the pH was maintained at 5.0 to 6.0 with the addition of a 10% aqueous sodium carbonate solution. After the coupling reaction was completed, the temperature was set 0 to 5 °C by addition of ice. 0.2 parts of a dispersing agent were added, and then 18.5 parts of cyanuric chloride were added to carry out a condensation reaction at 0 to 5 °C while the pH was maintained at 6.0 to 7.0 with the addition of a 10% aqueous sodium carbonate solution. After the end of the reaction was confirmed, 12.5 parts of taurine were added to end the reaction at 55 to 60 °C while the pH was maintained at 6.0 to 7.0 with the addition of a 10% aqueous sodium carbonate solution. After the end of the reaction was confirmed, sodium chloride was added to permit salting out, filtration, and drying at 80 °C or less. As a result, reddish yellow powder of the golden yellow dye represented by the above formula (1) was obtained. The reddish yellow powder was purified in 10 parts by mass of water by a reverse osmosis method and dried at 80 °C or less. As a result, reddish yellow crystals (λmax = 420 nm: in water) of the golden yellow dye represented by the above formula (1) and containing a very small amount of inorganic salts were obtained.

### Preparation of Ink Composition

After an ink composition was obtained by mixing the dyes at the composition ratio as listed in Table 2 below and stirring the mixture for about 1 hour until the solid contents were dissolved, the resulting solution was filtered through a 0.45 µm membrane filter (trade name, Cellulose Acetate Filter Paper, manufactured by Advantec Toyo Kaisha, Ltd.,) to prepare the ink composition for tests.

**[Table 2]**

| Ink composition | Composition ratio |
|---|---|
| Dye | X parts |
| Propylene glycol | 25 parts |
| Tris(hydroxymethyl)aminomethane | 0.5 parts |
| Surfynol 440 | 0.1 parts |
| Proxel GXL | 0.1 parts |
| Water | Remainder |
| Total | 100 parts |

### Reference Example 1

(Yellow-based) compound represented by the above formula (1): X = 10 parts Reference Example 2
(Black-based) C.I.Reactive Black 8 : X = 10 parts

### Comparative Examples 1 to 4

Ink compositions of Comparative Examples 1 to 4 were prepared in the same manner as Reference Example 1 except that C.I.Reactive Yellow 95 and C.I.Reactive Orange 12 were used in place of the yellow-based dye used in Reference Example 1, C.I.Reactive Red 31 was used as a red-based dye, and C.I.Reactive Blue 15:1 was used as a blue-based dye.

### Comparative Example 1

(Yellow-based) C.I.Reactive Yellow 95: X = 10 parts

### Comparative Example 2

(Yellow-based) C.I.Reactive Orange 12: X = 10 parts

### Comparative Example 3

(Red-based) C.I.Reactive Red 31: X = 10 parts

### Comparative Example 4

(Blue-based) C.I.Reactive Blue 15:1: X = 10 parts

### Preparation of Test Dyed Fabric with Single Dye Ink Composition

Onto a cotton fabric which had been subjected to a pretreatment using an aqueous solution containing sodium alginate, urea, sodium hydrogen carbonate, and sodium meta nitro benzene sulfonate by a padding method, textile-printing of a stereotypic pattern was carried out using the inks of Reference Examples 1 and 2 with an ink jet printer PX-101 (manufactured by Seiko Epson Corporation). After this the printed fabric was subjected to intermediate drying at 60 to 80 °C, a steaming treatment was carried out at 100 to 103 °C for 2, 5, 8, 15, and 20 minutes. After washing with water, the fabric was washed with boiling water at 95 to 100°C for 10 minutes, followed by washing with water and drying to obtain test dyed fabrics. These test dyed fabrics were referred to as "Reference Dyed Fabrics 1-1, 1-2, 1-3, 1-4, 1-5, 2-1, 2-2, 2-3, 2-4, and 2-5", respectively.

Each test dyed fabric was obtained in the same manner as described above except that the ink compositions of Comparative Examples 1 to 4 were used in place of the ink compositions of Reference Examples 1 and 2. These are referred to as "Comparative Dyed Fabrics 1-1, 1-2, 1-3, 1-4, 1-5, 2-1, 2-2, 2-3, 2-4, 2-5, 3-1, 3-2, 3-3, 3-4, 3-5, 4-1, 4-2, 4-3, 4-4, and 4-5", respectively.

### Evaluation of Hue of Each Dyed Fabric

The hue was evaluated on each test dyed fabric obtained as described above. The hue was determined by colorimetric measurement of the dyed fabrics using a colorimetric photometer manufactured by GRETAG-MACBETH AG, trade name SpectroEye to measure a^{*}, b^{*}, reflection density, D value, of each color. Furthermore, in order to express dependence on the steaming time for easy understanding, each D value was expressed in % with respect to 100% of a D value in the case where the steaming time was 8 minutes. The result thereof was as listed in Table 3 below.

**[Table 3]**

| Test dyed fabrics | Steaming time (minute) | a* | b* | D value | % |
|---|---|---|---|---|---|
| Reference dyed fabric 1-1 | 2 | 21.1 | 81.2 | 1.20 | 90% |
| 1-2 | 5 | 27.9 | 86.5 | 1.33 | 100% |
| 1-3 | 8 | 28.3 | 87.1 | 1.33 | 100% |
| 1-4 | 15 | 27.9 | 86.8 | 1.32 | 99% |
| 1-5 | 20 | 27.7 | 87.2 | 1.33 | 100% |
| Reference dyed fabric 2-1 | 2 | -4.9 | -10.0 | 0.62 | 77% |
| 2-2 | 5 | -5.5 | -10.7 | 0.74 | 91% |
| 2-3 | 8 | -6.3 | -10.9 | 0.81 | 100% |
| 2-4 | 15 | -6.4 | -11.0 | 0.81 | 100% |
| 2-5 | 20 | -6.7 | -11.2 | 0.82 | 101% |
| Comparative dyed fabric 1-1 | 2 | -8.2 | 79.0 | 1.04 | 97% |
| 1-2 | 5 | -8.5 | 79.5 | 1.09 | 102% |
| 1-3 | 8 | -7.9 | 79.8 | 1.07 | 100% |
| 1-4 | 15 | -8.3 | 76.2 | 0.99 | 93% |
| 1-5 | 20 | -8.1 | 74.8 | 0.97 | 91% |
| Comparative dyed fabric 2-1 | 2 | 24.6 | 87.3 | 1.30 | 93% |
| 2-2 | 5 | 29.7 | 90.8 | 1.44 | 103% |
| 2-3 | 8 | 28.6 | 89.0 | 1.40 | 100% |
| 2-4 | 15 | 28.3 | 89.2 | 1.36 | 97% |
| 2-5 | 20 | 27.4 | 88.1 | 1.34 | 96% |
| Comparative dyed fabric 3-1 | 2 | 68.5 | -3.4 | 1.29 | 103% |
| 3-2 | 5 | 68.1 | -4.3 | 1.28 | 102% |
| 3-3 | 8 | 67.4 | -5.8 | 1.25 | 100% |
| 3-4 | 15 | 65.6 | -7.3 | 1.14 | 91% |
| 3-5 | 20 | 64.3 | -8.3 | 1.10 | 88% |
| Comparative dyed fabric 4-1 | 2 | -36.8 | -36.6 | 1.12 | 85% |
| 4-2 | 5 | -36.9 | -39.6 | 1.25 | 95% |
| 4-3 | 8 | -40.3 | -40.3 | 1.32 | 100% |
| 4-4 | 15 | -40.1 | -40.1 | 1.35 | 102% |
| 4-5 | 20 | -40.2 | -40.2 | 1.33 | 101% |

In Example 1, the dyes used in Reference Examples 1 and 2 were blended to prepare a gray ink composition.

### Example 1

(Yellow-based) compound represented by the above formula (1): X = 0.1 part
(Black-based) C.I.Reactive Black 8 : X = 3 parts
(3.1 parts in total)

### Comparative Examples 5 to 6

In Comparative Examples 5 and 6, the dyes used in Reference Example 2 and Comparative Examples 1 to 4 were blended to prepare a gray ink composition. Furthermore, as comparative examples of a gray ink composition, an ink composition (Comparative Example 5) as a blend of a yellow-based dye of the same kind as the compound represented by the above formula (1) and a gray ink composition (Comparative Example 6) as a blend of three kinds of yellow-based, red-based, and blue-based dyes were prepared.

### Comparative Example 5

(Yellow-based) C.I.Reactive Orange 12: X = 0.1 part
(Black-based) C.I.Reactive Black 8 : X = 3 parts
(3.1 parts in total)

### Comparative Example 6

(Yellow-based) C.I.Reactive Yellow 95: X = 1.5 parts
(Red-based) C.I.Reactive Red 31 : X = 1.5 parts
(Blue-based) C.I.Reactive Blue 15:1 : X = 1.5 parts
(4.5 parts in total)

### Preparation of Test Dyed Fabric with Blended Gray Ink Composition

Onto a cotton fabric which had been subjected to a pretreatment using an aqueous solution containing sodium alginate, urea, sodium hydrogen carbonate, and sodium meta nitro benzene sulfonate by a padding method, textile-printing of a stereotypic pattern was carried out using the ink of Example 1 and with an ink jet printer PX-101 (manufactured by Seiko Epson Corporation). After this printed fabric was subjected to intermediate drying at 60 to 80 °C, steaming treatment was carried out at 100 to 103 °C for 8, 15, and 20 minutes. After washing with water, the fabric was washed with boiling water at 95 to 100 °C for 10 minutes, followed by washing with water and drying to obtain test dyed fabrics. These test dyed fabrics were referred to as "Dyed Fabrics 1-1, 1-2, and 1-3", respectively.

Each test dyed fabric was obtained in the same manner as described above except that the ink compositions of Comparative Examples 5 and 6 were used in place of the ink composition of Example 1. These are referred to as "Comparative Dyed Fabrics 5-1, 5-2, 5-3, 6-1, 6-2, and 6-3", respectively.

### Evaluation of Hue of Each Dyed Fabric

The hue was evaluated on each test dyed fabric obtained as described above. The hue was determined by colorimetric measurement of the dyed fabrics using a colorimetric photometer manufactured by GRETAG-MACBETH AG, trade name SpectroEye to measure a^{*}, b^{*}, reflection density, DB value, of black. Furthermore, in order to express dependence on the steaming time for easy understanding, each DB value was expressed in % with respect to 100% of a DB value in the case where the steaming time was 8 minutes. A result thereof was as listed in Table 4 below.

**[Table 4]**

| Test dyed fabrics | Steaming time (minute) | a* | b* | DB value | % |
|---|---|---|---|---|---|
| Dyed fabric 1-1 | 8 | -3.4 | -6.2 | 0.55 | 100% |
| 1-2 | 15 | -3.6 | -6.2 | 0.55 | 100% |
| 1-3 | 20 | -3.5 | -6.3 | 0.55 | 100% |
| Comparative dyed fabric 5-1 | 8 | -2.5 | -4.5 | 0.55 | 100% |
| 5-2 | 15 | -3.1 | -5.1 | 0.55 | 100% |
| 5-3 | 20 | -4.0 | -5.5 | 0.55 | 100% |
| Comparative dyed fabric 6-1 | 8 | -2.0 | -8.2 | 0.61 | 100% |
| 6-2 | 15 | -4.3 | -9.9 | 0.61 | 100% |
| 6-3 | 20 | -7.2 | -10.0 | 0.60 | 99% |

### Evaluation of fabric dyed with Single Dye Ink Composition

According to the result listed in Table 3, among the fabrics dyed with the single dye ink compositions, the fabric dyed with the yellow-based dye and C.I.Reactive Black 8 of Synthesis Example 1 had a small change in dyeing density depending on steaming time as compared with each of the Comparative Examples. In particular, in the range of 8 to 20 minutes as a preferable steaming time range, the density change rate of the reference dyed fabrics prepared in Reference Example 1 was in the range of 99 to 100%, and the density change rate of the reference dyed fabrics prepared in Reference Example 2 was in the range of 100 to 101%. Thus, it could be seen that when the steaming time was 8 minutes or longer, the dyeing density did not depend on steaming time.

On the other hand, in the same steaming time range, density change rates of the comparative dyed fabrics prepared in Comparative Example 1, Comparative Example 2, Comparative Example 3, and Comparative Example 4 were in the ranges of 91 to 100%, 96 to 100%, 88 to 100%, and 100 to 102%, respectively. It could be seen that the dyeing density varied depending on the steaming time as compared with the Reference Examples.

### Evaluation of fabric dyed with Blended Gray Ink Composition

According to the result listed in Table 4, among the fabrics dyed with the blended gray ink compositions, the fabric dyed in Example 1 with a blend of the yellow-based dye and C.I.Reactive Black 8 of Synthesis Example 1 and the fabrics dyed in the respective Comparative Examples all had a small change in dyeing density depending on the steaming time. In particular, in the range of 8 to 20 minutes as a preferable steaming time range, the density change rate of the dyed fabrics prepared in Example 1 and Comparative Examples 5 and 6 was in the range of 99 to 100%. Thus, it could be seen that when the steaming time was 8 minutes or longer, the dyeing density did not depend on the steaming time.

However, according to a^{*}, b^{*} values of the respective dyed fabrics, as for the hue, the dyed fabrics prepared in Example 1 and Comparative Examples 5 to 6 had a^{*}, b^{*} values close to 0 and had gray hues. However, only the dyed fabrics dyed with the gray ink of Example 1 of the present invention had uniform a^{*}, b^{*} values regardless of the change in steaming time. The comparative dyed fabrics prepared in Comparative Examples 5 to 6 had a change in a^{*}, b^{*} values depending on the steaming time and had faint gray tones. In particular, the dyed fabrics prepared in Comparative Example 6 had a high faintness in a^{*}, and the gray tones were gradually changed from red to blue and yellow. In the case where dyes of three colors were blended to make gray, each color was easily affected by the dependence on the steaming time and the gray tone was changed as compared with the case where dyes of two colors were blended to make gray.

From the above-described results, the dyed fabrics of Example 1 had high reproducibility with respect to steaming time in color formation within the gray color range as compared with Comparative Examples 5 and 6.

### INDUSTRIAL APPLICABILITY

A gray ink composition for ink jet textile printing of the present invention can provide a dyed fabric with high color reproducibility of a gray hue.

## Claims

1. A gray ink composition for ink jet textile printing comprising a compound represented by the following formula (1) or a salt thereof in a coloring agent: 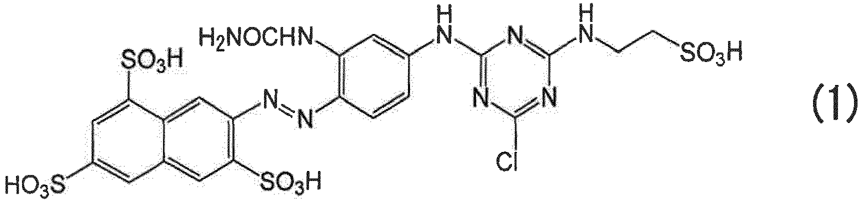 , and further comprising C.I. Reactive Black 8 in the coloring agent.

2. The gray ink composition for ink jet textile printing according to claim 1, further comprising a water-soluble organic solvent.

3. The gray ink composition for ink jet textile printing according to any one of claims 1 to 2, further comprising tris(hydroxymethyl)aminomethane as a pH adjusting agent.

4. The gray ink composition for ink jet printing according to any one of claims 1 to 3, wherein a viscosity of the gray ink composition is in the range of 3 to 20 mPa·s at 25 °C.

5. An ink set for ink jet textile printing comprising: a gray ink composition for ink jet printing according to any one of claims 1 to 4; a cyan ink composition; a magenta ink composition; a yellow ink composition; and a black ink composition.

6. A method of textile printing of cellulosic fibers comprising the steps of:
A) applying an ink to cellulosic fibers using a gray ink composition for ink jet textile printing according to any one of claims 1 to 4 as the ink with an ink jet printer;
B) allowing the coloring agent in the ink applied in the step A) to react and fix on the cellulosic fibers by heat; and
C) washing away any unfixed coloring agent remaining in the cellulosic fibers.

7. The method of textile printing of cellulosic fibers according to claim 6, further comprising the step of:
D) pretreating the fibers before applying the ink, by applying an aqueous solution containing at least a sizing material, an alkaline substance, an anti-reducing agent, and a hydrotropic agent to the cellulosic fibers.

## Patentansprüche

1. Eine graue Tintenzusammensetzung für Tintenstrahldruck auf Textil, umfassend eine Verbindung repräsentiert durch die folgende Formel (1) oder ein Salz davon in einem Färbemittel: 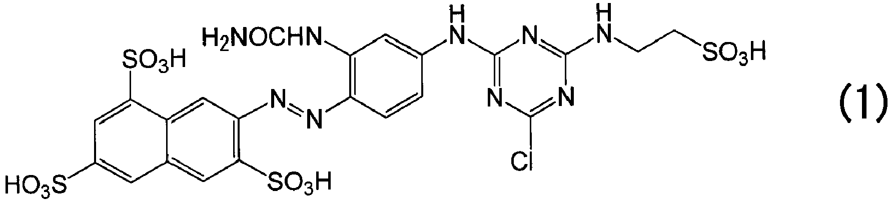 , und außerdem umfassend C.I. Reactive Black 8 in dem Färbemittel.

2. Die graue Tintenzusammensetzung für Tintenstrahldruck auf Textil gemäß Anspruch 1, des Weiteren umfassend ein wasserlösliches organisches Lösemittel.

3. Die graue Tintenzusammensetzung für Tintenstrahldruck auf Textil gemäß irgendeinem der Ansprüche 1 bis 2, des Weiteren umfassend Tris(hydroxymethyl)aminomethan als ein Reagenz zur Einstellung des pH.

4. Die graue Tintenzusammensetzung für Tintenstrahldruck auf Textil gemäß irgendeinem der Ansprüche 1 bis 3, wobei eine Viskosität der grauen Tintenzusammensetzung sich im Bereich von 3 bis 20 mPa·s bei 25 °C befindet.

5. Ein Tinten-Set für Tintenstrahldruck auf Textil, umfassend: eine graue Tintenzusammensetzung für Tintenstrahldruck auf Textil gemäß irgendeinem der Ansprüche 1 bis 4; eine Cyan-Tintenzusammensetzung; eine Magenta-Tintenzusammensetzung; eine gelbe Tintenzusammensetzung; und eine schwarze Tintenzusammensetzung.

6. Ein Verfahren zum Textildruck auf Zellulosefasern, umfassend die Schritte:
A) Aufbringen einer Tinte auf Zellulosefasern unter Verwendung einer grauen Tintenzusammensetzung für Tintenstrahldruck auf Textil gemäß irgendeinem der Ansprüche 1 bis 4 als Tinte mit einem Tintenstrahldrucker;
B) Reagierenlassen des Färbemittels in der in Schritt A) aufgebrachten Tinte, und Fixieren durch Hitze auf den Zellulosefasern; und
C) Abwaschen von jeglichem nicht-fixiertem Färbemittel, das in den Zellulosefasern verblieben ist.

7. Das Verfahren zum Textildruck auf Zellulosefasern gemäß Anspruch 6, des Weiteren umfassend den Schritt:
D) Vorbehandlung der Fasern vor dem Aufbringen der Tinte durch Auftragen einer wässrigen Lösung enthaltend wenigstens ein Leimmaterial, eine alkalische Substanz, ein Anti-Reduktionsmittel, und ein hydrotropes Reagenz auf die Zellulosefasern.

## Revendications

1. Une composition d'encre grise pour de l'impression de textiles par jet d'encre, comprenant un composé représenté par la formule (1) suivante ou un sel de celui-ci dans un agent colorant : 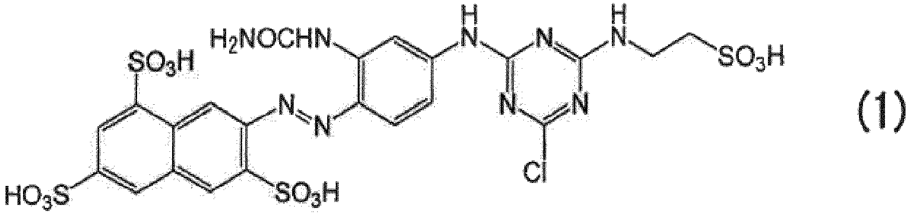 , et comprenant en outre le C.I. Reactive Black 8 dans l'agent colorant.

2. La composition d'encre grise pour de l'impression de textiles par jet d'encre selon la revendication 1, comprenant en outre un solvant organique hydrosoluble.

3. La composition d'encre grise pour de l'impression de textiles par jet d'encre selon l'une quelconque des revendications 1 à 2, comprenant en outre du tris(hydroxyméthyl)aminométhane en tant qu'agent d'ajustement du pH.

4. La composition d'encre grise pour de l'impression par jet d'encre selon l'une quelconque des revendications 1 à 3, dans laquelle une viscosité de la composition d'encre grise se situe dans la gamme allant de 3 à 20 mPa s à 25°C.

5. Un ensemble d'encres pour de l'impression de textiles par jet d'encre comprenant : une composition d'encre grise pour de l'impression par jet d'encre selon l'une quelconque des revendications 1 à 4 ; une composition d'encre cyan ; une composition d'encre magenta ; une composition d'encre jaune ; et une composition d'encre noire.

6. Un procédé d'impression textile de fibres cellulosiques comprenant les étapes consistant à :
A) appliquer une encre à des fibres cellulosiques en utilisant une composition d'encre grise pour de l'impression de textiles par jet d'encre selon l'une quelconque des revendications 1 à 4 en tant qu'encre avec une imprimante à jet d'encre ;
B) permettre à l'agent colorant présent dans l'encre appliquée à l'étape A) de réagir et de se fixer sur les fibres cellulosiques par la chaleur ; et
C) éliminer par lavage tout agent colorant non fixé restant dans les fibres cellulosiques.

7. Le procédé d'impression textile de fibres cellulosiques selon la revendication 6, comprenant en outre l'étape consistant à :
D) prétraiter les fibres avant l'application de l'encre, en appliquant aux fibres cellulosiques une solution aqueuse contenant au moins une matière d'ensimage, une substance alcaline, un agent anti-réducteur et un agent hydrotrope.
